# EUROPÄISCHE PATENTANMELDUNG

(11) **EP 0 947 269 A1**
(43) Veröffentlichungstag der Anmeldung: **06.10.1999**
(21) Anmeldenummer: 98105721.9
(22) Anmeldetag: 30.03.1998
(51) Int. Cl.: B23B 31/40, B23B 31/16, B23B 31/00

(54) **Vorrichtung zum Aufspannen von ringförmigen Werkstücken**

(71) Anmelder: Iprotec Maschinen- und Edelstahlprodukte GmbH, 32469 Petershagen-Friedewalde (DE)
(72) Erfinder: Kochsiek, Guido, 33818 Leopoldshöhe (DE)
(74) Vertreter: Stenger, Watzke & Ring Patentanwälte

(57) **Zusammenfassung**

Die Erfindung betrifft eine Vorrichtung zum Aufspannen von ringförmigen Werkstücken (3), insbesondere von Kugelkäfigen von Gleichlaufgelenken, zur spanabhebenden Bearbeitung auf einer Werkzeugmaschine mit einer antreibbaren Werkstückspindel (1). Um bei einer derartigen Vorrichtung dafür zu sorgen, daß das Werkstück (3) einerseits lagegenau und verdrehsicher auf der Werkstückspindel (1) gehalten wird, aus den Spannkräften aber keine plastische Verformung des Werkstückes (3) resultiert, wird erfindungsgemäß vorgeschlagen, daß auf der Werkstückspindel (1) eine Spanneinrichtung (2, 18) angeordnet ist, die eine Mehrzahl von Spannelementen (8, 10, 20 und 21) umfaßt, die mit an dem Werkstück (3) ausgebildeten Spannflächen zusammenwirken, um das Werkstück (3) verdrehsicher zu halten, und daß die Spannelemente (8, 10, 20 und 21) in der Spannposition arretierbar sind.

## Beschreibung

Die Erfindung betrifft eine Vorrichtung zum Aufspannen von ringförmigen Werkstücken, insbesondere von Kugelkäfigen von Gleichlaufgelenken, zur spanabhebenden Bearbeitung auf einer Werkzeugmaschine mit einer antreibbaren Werkstückspindel.

Aus der Praxis sind verschiedene Vorrichtungen zum Aufspannen von Werkstücken zur spanabhebenden Bearbeitung bekannt. Insbesondere bei der Bearbeitung von ringförmigen, mit Aussparungen versehenen Bauteilen, wie beispielsweise Kugelkäfigen von Gleichlaufgelenken, resultieren aus den Zerspankräften des unterbrochenen Schnitts hohe Momente, die das zu bearbeitende Werkstück in der Aufspannvorrichtung verschieben bzw. verdrehen können. Da andererseits solche ringförmigen, mit Aussparungen versehenen Bauteile leicht plastisch verformbar sind, kann die Aufspannvorrichtung nicht beliebig fest angezogen werden, da ansonsten eine Verformung des zu bearbeitenden Werkstücks auftreten könnte. Bei den aus der Praxis bekannten Aufspannvorrichtungen muß aus den voranstehend genannten Gründen immer ein Kompromiß zwischen einer zu festen und einer zu losen Aufspannung gewählt werden, um einerseits den auftretenden Momenten entgegenzuwirken und andererseits ein Verformen des zu bearbeitenden Werkstücks zu vermeiden.

Der Erfindung liegt die **Aufgabe** zugrunde, eine Vorrichtung zum Aufspannen von ringförmigen Werkstücken zu schaffen, die eine feste und verdrehsichere Lagerung des zu bearbeitenden Werkstücks auf der Werkstückspindel gewährleistet, ohne daß jedoch die Gefahr einer Verformung des zu bearbeitenden Werkstücks besteht.

Die **Lösung** dieser Aufgabenstellung ist erfindungsgemäß dadurch gekennzeichnet, daß auf der Werkstückspindel eine Spanneinrichtung angeordnet ist, die eine Mehrzahl von Spannelementen umfaßt, die mit an dem Werkstück ausgebildeten Spannflächen zusammenwirken, um das Werkstück verdrehsicher zu halten, und daß die Spannelemente in der Spannposition arretiert sind.

Durch die Anlage der Spannelemente an speziellen, an dem Werkstück ausgebildeten Spannflächen wird sichergestellt, daß die Spannelemente das Werkstück während des gesamten Bearbeitungsprozesses fest und verdrehsicher halten. Die Gefahr des Deformierens des zu bearbeitenden Werkstücks aufgrund zu hoher Aufspannkräfte wird bei der erfindungsgemäß ausgestalteten Vorrichtung dadurch behoben, daß die Spannelemente in der an den Spannflächen des Werkstücks anliegenden Spannposition arretiert werden, so daß diese Spannelemente das zu behandelnde Werkstück mehr halten als wirklich einspannen.

Zum Außenaufspannen von ringförmigen Werkstücken, insbesondere von Kugelkäfigen von Gleichlaufgelenken wird gemäß einer ersten Ausführungsform der erfindungsgemäßen Aufspannvorrichtung vorgeschlagen, daß auf der Werkstückspindel eine Spanneinrichtung angeordnet ist, die eine Mehrzahl von radial zum Werkstück ausgerichteten Spannelementen und eine Anzahl von sekantial zum Werkstück ausgerichteten Spannelementen aufweist, die mit in der Spannfläche des Werkstückes ausgebildeten Vertiefungen zusammenwirken, um das aus den Zerspankräften resultierende Moment aufzunehmen. Durch diese Außenaufspannung des Werkstücks ist es in einem ersten Arbeitsschritt möglich, die Innenfläche des ringförmigen Werkstuckes zu bearbeiten. Die radial zum Werkstück ausgerichteten Spannelemente dienen dabei zur räumlichen Lagefixierung des Werkstücks auf der Werkstückspindel, während die sekantial zum Werkstück ausgerichteten Spannelemente ein Verdrehen des Werkstückes bei der spanabhebenden Bearbeitung verhindern. Durch diese erfindungsgemäße Kombination von radial und sekantial zum Werkstück ausgerichteten Spannelementen, die an in der Spannfläche ausgebildeten Vertiefungen anliegen, ist es möglich, das zu bearbeitende Werkstück ohne die Gefahr einer Verformung des Werkstückes aufgrund zu hoher Aufspannkräfte verdrehsicher und ortsfest auf der Werkstückspindel festzulegen.

Um bei kugelringförmigen Spannflächen eine gleichmäßige Verteilung der Aufspannkräfte über die gesamte Mantelfläche des innen zu bearbeitenden Werkstücks zu erhalten, wird gemäß einer praktischen Ausführungsform der Außenaufspannvorrichtung vorgeschlagen, daß zumindest die radialen Spannelemente unter einem Winkel zueinander angeordnet sind, wobei die Spannrichtung auf den Kugelmittelpunkt zielt.

Weiterhin wird mit der Erfindung vorgeschlagen, daß die Spannelemente als druckmittelbetätigte Spannkolben ausgebildet sind. Gemäß einer bevorzugten Ausführungsform sind die Spannkolben hydraulisch betätigbar von einer Spannhülse umgeben, über die der Spannkolben in der am Werkstück anliegenden Stellung arretierbar ist. Die Ausbildung der Spannelemente als druckmittelbetätigbare Spannkolben stellt eine einfache und vielseitig verwendbare Ausgestaltung der Spannelemente dar, da die Spannelemente nicht an die Kontur des einzuspannenden Werkstücks angepaßt werden müssen. Je nach Außenkontur des zu aufzuspannenden Werkstücks wird der druckmittelbetätigte Spannkolben mehr oder weniger weit ausgefahren, bis er an der äußeren Mantelfläche des Werkstückes anliegt. Um zu verhindern, daß das Werkstück durch zu hohe Aufspannkräfte verformt wird, werden die Spannkolben nur mit einer geringen Anpreßkraft gegen das Werkstück eingestellt. Ein Verschieben der Spannkolben aufgrund der aus den Zerspankräften resultierenden Momente wird bei dieser erfindungsgemäßen Vorrichtung dadurch verhindert, daß die Spannkolben in die spannkolbenumgebenden Spannhülsen angeordnet sind, die betätigt werden, sobald der Spannkolben mit der vorgegebenen Kraft am Werkstück anliegt. Durch die den Kolbenschaft umgebenden Spannhülsen wird der Spannkolben radial eingeklemmt, so daß eine Axialverschiebung des Spannkolbens aufgrund der am Werkstück auftretenden Kräfte nicht mehr möglich ist. Durch diese Ausgestaltung der Spannelemente wird das Werkstück auf der Werkstückspindel mehr gehalten als eingespannt, da die einzelnen, an der äußeren Mantelfläche des Werkstückes anliegenden Spannkolben keine bzw. nur geringe Spannkräfte auf das Werkstück ausüben.

Zur Außenbearbeitung des kugelringförmigen Werkstücks wird gemäß einer zweiten Ausführungsform der erfindungsgemäßen Vorrichtung eine Innenaufspannvorrichtung vorgeschlagen, die dadurch gekennzeichnet ist, daß auf der Werkstückspindel eine Spanneinrichtung angeordnet ist, die einen mit einer Anlagefläche für das Werkstück versehenen aufspreizbaren Spanndorn und eine Mehrzahl von im wesentlichen radial zum Werkstück ausgerichteten Spannelementen aufweist, die mit an Spannflächen des Werkstücks ausgebildeten Vertiefungen zusammenwirken, um das aus den Zerspankräften resultierende Moment aufzunehmen. Mit dieser Innenaufspannvorrichtung ist es nunmehr möglich, das zu bearbeitende ringförmige Werkstück von der Innenseite her zu spannen, damit eine spanabhebende Bearbeitung der Außenkontur des Werkstückes erfolgen kann. Während der in das Innere des Werkstückes eingreifende aufspreizbare Spanndorn das Werkstück auf der Werkstückspindel festlegt und aufgrund der Anlagefläche in der richtigen Position zum Werkzeug positioniert, dienen die wesentlichen radial verlaufenden Spannelemente dazu, das Werkstück verdrehsicher auf der Werkstückspindel festzulegen, so daß dieses Werkstück aufgrund der auftretenden Spankräfte nicht verrückt wird.

Gemäß einer praktischen Ausführungsform der Erfindung umfaßt der Spanndorn einen axial in Richtung der Werkstückspindel verfahrbaren Stempel sowie ein den Stempel umgebendes Spannteil. Zum Aufspreizen des solchermaßen ausgestalteten Spanndorns weist der Stempel vorteilhafterweise eine konische äußere Mantelfläche auf, die mit einer konischen Innenfläche des Spannteils zusammenwirkt. Durch das Verfahren des Stempels wird somit aufgrund der gegenseitigen konischen Anlageflächen von Stempel und Spannteil das Spannteil entweder zum Festlegen des Werkstücks aufgespreizt oder aber zur Abnahme des Werkstücks gelöst.

Schließlich wird mit der Erfindung vorgeschlagen, daß die Spannelemente als am Spanndorn gelagerte federbelastete Spannbolzen ausgebildet sind. Beim Verfahren des Stempels zum Aufspreizen des Spannteils des Spanndorns legen sich die in Richtung des Werkstücks federbelasteten Spannbolzen gegen die entsprechenden Spannflächen des Werkstückes an, um dieses verdrehsicher zu halten.

Weitere Merkmale und Vorteile der Erfindung ergeben sich aus der nachfolgenden Beschreibung der zugehörigen Zeichnung, in der ein Ausführungsbeispiel einer erfindungsgemäßen Aufspannvorrichtung schematisch dargestellt ist. In der Zeichnung zeigt:
- Fig. 1: einen Längsschnitt durch eine Werkzeugspindel mit an der Werkzeugspindel befestigter Außenaufspannvorrichtung;
- Fig. 2: einen Schnitt entlang der Schnittlinie II-II gemäß Fig. 1;
- Fig. 3: einen Längsschnitt durch eine Werkzeugspindel mit auf der Werkzeugspindel angeordneter Innenaufspannvorrichtung und
- Fig. 4: einen Schnitt entlang der Schnittlinie IV-IV gemäß Fig. 3.

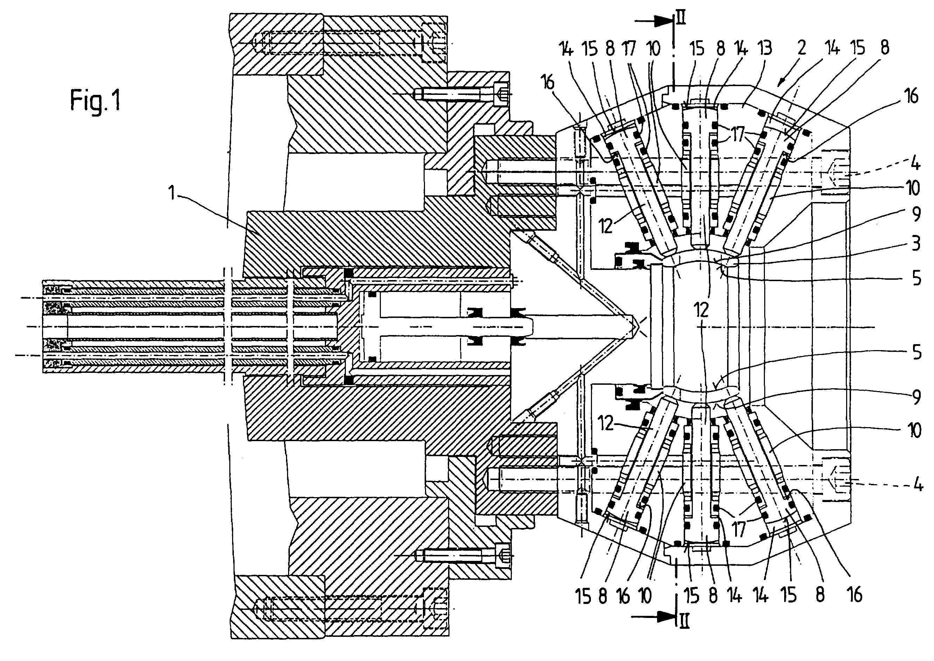

Fig. 1 zeigt einen Längsschnitt durch einen Teil einer Werkstückspindel 1, an deren stirnseitigem Ende eine Außenaufspannvorrichtung 2 zum Aufspannen eines ringförmigen Werkstückes 3 über Schraubverbindungen 4 festgelegt ist. Eine solche Außenaufspannvorrichtung 2 dient zum Festlegen des Werkstücks 3 bei der spanabhebenden Bearbeitung der Innenfläche 5 des Werkstückes 3.

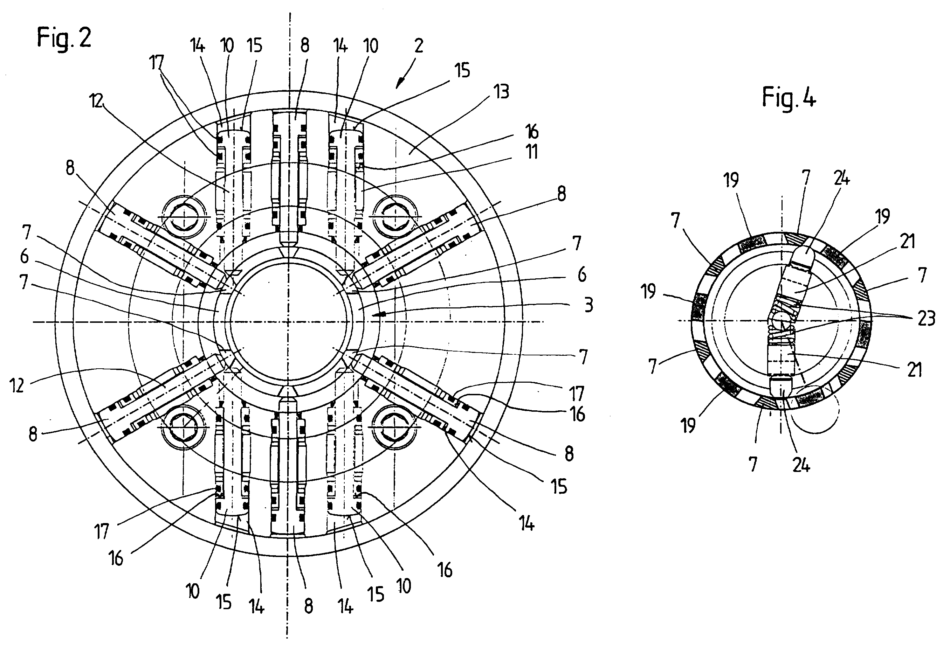

Aus Gründen einer besseren Übersichtlichkeit sind in den Schnittdarstellungen der Außenaufspannvorrichtung 2 gemäß Fig. 1 und 2 keine Schnittschraffuren eingezeichnet. Bei dem eingespannten ringförmigen Werkstück 3 handelt es sich um einen mit Kugeltaschen 6 versehenen Kugelkäfig eines Gleichlaufgelenks. Die in dem kugelringförmigen Kugelkäfig ausgebildeten Kugeltaschen 6 sind durch einzelne Stege 7 voneinander getrennt, wie dies aus Fig. 2 zu erkennen ist.

Fig. 1 zeigt die Positionierung einzelner Spannelemente 8 entlang der axialen Erstreckung des Werkstückes 3. Die als Spannkolben ausgebildeten Spannelemente 8 sind radial zum Werkstück 3 ausgerichtet und unter einem Winkel zueinander so angeordnet, daß die Spannrichtung auf den Mittelpunkt des Werkstückes 3 zielt. Durch diese radiale Ausrichtung der Spannelemente 8 entlang der äußeren Mantelfläche 9 des Werkstückes 3 wird eine gleichmäßige Kraftverteilung der durch die Spannelemente 8 auf das Werkstück 3 ausgeübten Spannkräfte bewirkt.

Die in Fig. 1 dargestellten radialen Spannelemente dienen zur räumlichen Positionierung des Werkstückes 3 auf der Werkstückspindel 1, d. h. zum Festlegen des Werkstückes 3 gegenüber dem - nicht dargestellten - Werkzeug. Da aus den bei der Bearbeitung auftretenden Zerspankräften ein Moment resultiert, durch das das zu bearbeitende Werkstück trotz der Lagerung durch die radialen Spannelemente 8 in Umfangsrichtung des Werkstückes 3 verdreht werden kann, ist es zusätzlich notwendig, das Werkstück 3 verdrehsicher auf der Werkstückspindel 1 festzulegen. Zu diesem Zweck weist die Außenaufspannvorrichtung 2 zusätzlich zu den radialen Spannelementen 8 sekantial verlaufende Spannelemente 10 auf, wie diese in Fig. 2 dargestellt sind. Wie aus der Abbildung Fig. 2 ersichtlich, greifen diese sekantial zum Werkstück 3 ausgerichteten Spannelemente 10 an den Seitenkanten der die Kugeltaschen 6 begrenzenden Stege 7 an. Aufgrund der aus verschiedenen Richtungen an den Seiten der Stege 7 angreifenden Spannelemente 10 ist es nicht mehr möglich, das Werkstück 3 in Umfangsrichtung zu verdrehen.

Um zu verhindern, daß das aufgrund der Aussparungen (Kugeltaschen 6) leicht verformbare kugelringförmige Werkstück 3 aufgrund der Aufspannkräfte der radialen und sekantialen Spannelemente 8 und 10 plastisch verformt wird, umfaßt jedes als Spannkolben ausgebildete Spannelement 8 und 10 weiterhin eine Spannhülse 11, die den Kolbenschaft 12 eines jeden Spannelementes 8, 10 umschließt und dazu dient, die Spannelemente 8 und 10 in der an dem Werkstück 3 anliegenden Position zu arretieren. Auf diese Weise ist es möglich, das zu bearbeitende Werkstück lagegenau und verdrehsicher auf der Werkstückspindel 1 festzulegen, ohne daß hohe Aufspannkräfte über die einzelnen Spannelemente 8, 10 auf das Werkstück 3 ausgeübt werden müssen, da ein Verschieben der Spannelemente 8, 10 und somit Lösen des Werkstückes 3 aufgrund des aus den Zerspankräften resultierenden Moments durch die die Spannelemente 8 und 10 in der Aufspannposition fixierenden Spannhülsen 11 verhindert wird.

Der genaue Aufbau der als Spannkolben ausgebildeten radialen und sekantialen Spannelemente 8 und 10 ist den Abbildungen Fig. 1 und 2 zu entnehmen. Ein jeder Kolben eines Spannelementes 8, 10 ist axial verschiebbar in einem im Gehäuse 13 der Außenaufspannvorrichtung 2 ausgebildeten Zylinderraum 14 angeordnet, wobei der zum Werkstück 3 hin gerichtete Kolbenschaft 12 von der Spannhülse 11 umgeben ist. Das Druckmittel zum Verschieben des Kolbens kann innerhalb des Zylinderraums 14 so umgepumpt werden, daß dieses entweder auf die freie Stirnfläche 15 des Kolbens wirkt und somit den Kolben in Richtung des Werkstückes 3 drückt oder aber auf die kreisringförmige Schulterfläche 16 am Übergang zum Kugelschaft 12 wirkt, um die Spannvorrichtung zu lösen und das Werkstück 3 freizugeben. Zur Abdichtung der Spannelemente 8 und 10 sowie der Spannhülse 11 gegenüber dem Gehäuse 13 sind Dichtungen 17 vorgesehen.

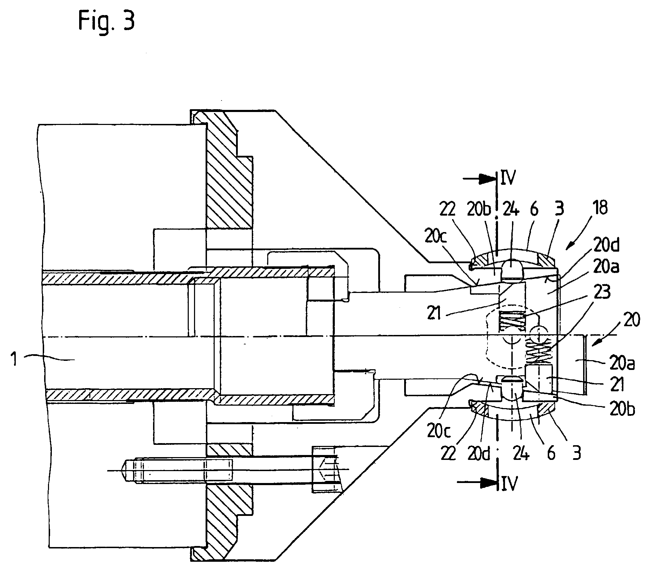

Im Gegensatz zu den Abbildungen Fig. 1 und 2 zeigen die Abbildungen Fig. 3 und 4 eine Werkstückspindel 1, die mit einer Innenaufspannvorrichtung 18 versehen ist. Eine solche Innenaufspannvorrichtung 18 wird verwendet, um die äußere Mantelfläche 9 des Werkstücks 3 und die in den Kugeltaschen 6 ausgebildeten Anlageflächen 19 für die in den Kugeltaschen anzuordnenden - nicht dargestellten - Kugeln bearbeiten zu können.

Die Innenaufspannvorrichtung 18 besteht aus einem aufspreizbaren Spanndorn 20, der aus einem axial in Richtung der Werkstückspindel verfahrbaren Stempel 20a sowie einem den Stempel 20a umgebenden Spannteil 20b besteht, sowie einer Mehrzahl von im wesentlichen radial zum Werkstück 3 ausgerichteten Spannelementen 21. Zum Aufspreizen des Spanndorns 20 weist der Stempel 20a eine konische äußere Mantelfläche 20c auf, die mit einer entsprechenden konischen Innenfläche 20d des Spannteils 20b zusammenwirkt.

Zum Festlegen des zu bearbeitenden ringförmigen Werkstücks 3 an der Innenaufspannvorrichtung 18 wird das Werkstück 3 soweit auf das Spannteil 20b aufgesetzt, bis dieses an einer Anlagefläche 22 anliegt. Anschließend wird zum Aufspreizen des Spanndorns 20 der Stempel 20a nach innen gezogen, wodurch aufgrund der zusammenwirkenden konischen Mantelfläche 20c sowie der konischen Innenfläche 20d von Stempel 20a und Spannteil 20b das Spannteil 20b aufgeweitet wird, bis dieses das Werkstück 3 lagegenau und ortsfest auf der Innenaufspannvorrichtung 18 festlegt.

Der obere Teil der Abbildung Fig. 3 zeigt den Stempel 20a in der das Spannteil 20b aufspreizenden Stellung, während in der unteren Darstellung der Stempel 20a noch aus dem Spannteil 20b herausragt und die beiden konischen Flächen 20c und 20d noch nicht aneinanderliegen.

Die im wesentlichen radial zum Werkstück 3 ausgerichteten Spannelemente 21 dienen dazu, das in bezug auf das - nicht dargestellte - Werkzeug lagegenau ausgerichtete Werkstück 3 verdrehsicher auf der Innenaufspannvorrichtung 18 festzulegen. Wie aus den Abbildungen Fig. 3 und 4 ersichtlich, sind die Spannelemente 21 als über jeweils eine Feder 23 in Richtung auf das Werkstück 3 federbelastete Spannbolzen ausgebildet. Die Köpfe 24 der Spannbolzen liegen seitlich an den die Kugeltaschen 6 voneinander trennenden Stegen 7 an, so daß ein Verdrehen des Werkstückes 3 in Umfangsrichtung aufgrund der Zerspankräfte nicht möglich ist.

Aufgrund der voranstehend beschriebenen Ausgestaltung einer Vorrichtung zum Aufspannen von ringförmigen Werkstücken 3 ist es möglich, die mit Aussparungen versehenen, plastisch leicht verformbaren Werkstücke 3 lagegenau und verdrehsicher auf der Werkstückspindel 1 festzulegen, ohne daß die Gefahr besteht, daß einerseits das Werkstück 3 verdreht oder verschoben wird oder aber andererseits das Werkstück 3 durch zu hohe Aufspannkräfte plastisch verformt wird. Das Umspannen des Werkstückes 3 von der Außenaufspannvorrichtung 2 auf die Innenaufspannvorrichtung 18 ist selbstverständlich automatisch mittels eines das Werkstück 3 ergreifenden Greifers möglich, der das bearbeitete Werkstück 3 der einen Aufspannvorrichtung entnimmt und der anderen Aufspannvorrichtung zuführt.

### Bezugszeichenliste

- 1: Werkstückspindel
- 2: Außenaufspannvorrichtung
- 3: Werkstück
- 4: Schraubverbindung
- 5: Innenfläche
- 6: Kugeltasche
- 7: Steg
- 8: radiales Spannelement
- 9: Mantelfläche
- 10: sekantiales Spannelement
- 11: Spannhülse
- 12: Kolbenschaft
- 13: Gehäuse
- 14: Zylinderraum
- 15: Stirnfläche
- 16: Schulterfläche
- 17: Dichtung
- 18: Innenaufspannvorrichtung
- 19: Anlagefläche
- 20: Spanndorn
- 20a: Stempel
- 20b: Spannteil
- 20c: konische Mantelfläche
- 20d: konische Innenfläche
- 21: Spannelement
- 22: Anlagefläche
- 23: Feder
- 24: Kopf

## Patentansprüche

1. Vorrichtung zum Aufspannen von ringförmigen Werkstücken, insbesondere von Kugelkäfigen von Gleichlaufgelenken, zur spanabhebenden Bearbeitung auf einer Werkzeugmaschine mit einer antreibbaren Werkstückspindel (1),
**dadurch gekennzeichnet,**
daß auf der Werkstückspindel (1) eine Spanneinrichtung (2, 18) angeordnet ist, die eine Mehrzahl von Spannelementen (8, 10, 20 und 21) umfaßt, die mit an dem Werkstück (3) ausgebildete Spannflächen zusammenwirken, um das Werkstück (3) verdrehsicher zu halten, und daß die Spannelemente (6, 8, 20 und 21) in der Spannposition arretierbar sind.

2. Vorrichtung nach Anspruch 1 zum Außenaufspannen von ringförmigen Werkstücken (3), insbesondere von Kugelkäfigen von Gleichlaufgelenken, dadurch gekennzeichnet, daß auf der Werkstückspindel (1) eine Außenaufspannvorrichtung (2) angeordnet ist, die eine Mehrzahl von radial zum Werkstück (3) ausgerichteten Spannelementen (8) und eine Anzahl von sekantial zum Werkstück (3) ausgerichteten Spannelementen (10) aufweist, die mit in den Spannflächen des Werkstückes (3) ausgebildeten Vertiefungen zusammenwirken, um das aus den Zerspankräften resultierende Moment aufzunehmen.

3. Vorrichtung nach Anspruch 2, dadurch gekennzeichnet, daß bei kugelringförmigen Spannflächen zumindest die radialen Spannelemente (8) unter einem Winkel zueinander angeordnet sind, wobei die Spannrichtung auf den Kugelmittelpunkt zielt.

4. Vorrichtung nach Anspruch 2 oder 3, dadurch gekennzeichnet, daß die Spannelemente (8, 10) als druckmittelbetätigte Spannkolben ausgebildet sind.

5. Vorrichtung nach Anspruch 4, dadurch gekennzeichnet, daß die Spannkolben hydraulisch betätigbar von einer Spannhülse (11) umgeben sind, über die die Spannkolben in der an der Mantelfläche (9) des Werkstückes (3) anliegenden Stellung arretierbar sind.

6. Vorrichtung nach Anspruch 1 zur Innenaufspannung von ringförmigen Werkstücken, insbesondere von Kugelkäfigen von Gleichlaufgelenken, dadurch gekennzeichnet, daß auf der Werkstückspindel (1) eine Innenaufspannvorrichtung (18) angeordnet ist, die einen mit einer Anlagefläche (22) für das Werkstück (3) versehenen aufspreizbaren Spanndorn (20) und eine Mehrzahl von im wesentlichen radial zum Werkstück (3) ausgerichteten Spannelementen (21) aufweist, die mit an den Spannflächen des Werkstückes (3) ausgebildeten Vertiefungen zusammenwirken, um das aus den Zerspankräften resultierende Moment aufzunehmen.

7. Vorrichtung nach Anspruch 6, dadurch gekennzeichnet, daß der Spanndorn (20) einen axial in Richtung der Werkstückspindel (1) verfahrbaren Stempel (20a) sowie ein den Stempel (20a) umgebendes aufspreizbares Spannteil (20b) umfaßt.

8. Vorrichtung nach Anspruch 7, dadurch gekennzeichnet, daß der Stempel (20a) eine konische äußere Mantelfläche (20c) aufweist, die mit einer konischen Innenfläche (20d) des Spannteils (20b) zusammenwirkt.

9. Vorrichtung nach mindestens einem der Ansprüche 6 bis 8, dadurch gekennzeichnet, daß die Spannelemente (21) als am Spanndorn (20) gelagerte, federbelastete Spannbolzen ausgebildet sind.
